# EUROPÄISCHE PATENTSCHRIFT

(11) **EP 2 785 540 B1**
(45) Veröffentlichungstag und Bekanntmachung des Hinweises auf die Patenterteilung: **27.02.2019**
(21) Anmeldenummer: 12797856.7
(22) Anmeldetag: 30.11.2012
(51) Int. Cl.: B66D 1/26, B66B 15/02, F16D 11/04

(54) **VERSTECKVORRICHTUNG**
COUPLING DEVICE
DISPOSITIF D'ACCOUPLEMENT

(30) Priorität: 02.12.2011 DE 102011120047
(43) Veröffentlichungstag der Anmeldung: 08.10.2014
(73) Patentinhaber: Siemag Tecberg GmbH, 35708 Haiger (DE)
(72) Erfinder: HOFMANN, Klaus, 57250 Netphen (DE); HEISINGER, Dennis, 57078 Siegen (DE); KOCH, Matthias, 35745 Herborn (DE); NYGA, Karol, PL-43-150 Bierun (PL)
(74) Vertreter: Sonnenberg, Fred
(86) Internationale Anmeldenummer: PCT/EP2012/074159
(87) Internationale Veröffentlichungsnummer: WO 2013/079699

(56) Entgegenhaltungen:
- DE-A1- 2 943 639
- DE-B- 1 200 491
- DE-C- 594 707
- DE-C- 922 194
- GB-A- 1 401 188

## Beschreibung

Die vorliegende Erfindung bezieht sich auf eine Versteckvorrichtung für Fördermaschinen, wie durch den Oberbegriff des unabhängigen Patentanspruches 1 beschrieben.

In der Schacht- und Schrägfördertechnik kommen bei geringen Tiefen bis 500 m und bei großen Tiefen von 1.750 m bis 3.000 m sogenannte Doppeltrommel-Fördermaschinen oder Doppeltrommel-Blair-Fördermaschinen zum Einsatz, welche ein bzw. zwei Seile je Trommel entgegenwirkend auf- bzw. abtrommeln.

Dabei ist in der Regel mindestens eine der Trommeln als Lostrommel und die andere gegebenenfalls als Festtrommel ausgeführt. Die Lostrommel, welche über Gleitbuchsen oder Wälzlager drehbar auf der Hauptwelle gelagert ist, wird dabei mit einer sogenannten Versteckvorrichtung mit der Hauptwelle verbunden.

Diese Versteckvorrichtung muss als lös- und schaltbare Kupplung ausgeführt sein, um die beiden Trommeln im Stillstand bei aufgelegter Lostrommelbremse jederzeit relativ zueinander verfahren zu können. Eine mehrwellige Fördermaschine mit Versteckvorrichtung, Fest- und Lostrommel wird zum Beispiel in GB 1 401 188 A offenbart.

In der Lebensdauer von Förderseilen verändert sich die Längung und Dehnung der Seile auf-grund von Belastungen im Förderbetrieb sowie Eigengewichten. Da sich die verschiedenen Seile dabei jedoch immer unterschiedlich stark längen, müssen im zweitrumigen Förderbetrieb die beiden Trommeln einer Doppeltrommel-Fördermaschine bzw. einer Doppeltrommel-Blair-Fördermaschine relativ zueinander verfahren werden können, um ein einheitliches und sicheres Vorstehen des einen Fördermittels an der Beladungsstelle auf einer Sohle unter Tage und des anderen Fördermittels an der Entladungsstelle zu gewährleisten. Mit einer Konstellation der beschriebenen Art erreicht man unter anderem einen Ausgleich von Seildehnungen an Be- und Entladungsstellen.

Gleichzeitig kann es im Schacht- und Schrägförderbetrieb aber auch vorkommen, dass die Förderung des Fördergutes von einer Sohle auf eine andere, weiter oben oder unten befindliche, Sohle verlegt werden soll. Auch dazu müssen die beiden Trommeln der Fördermaschine relativ zueinander verfahren werden können, um ein gleichzeitiges Vorstehen des einen Fördermittels an der Entladungsstelle und des anderen Fördermittels an der Beladungsstelle auf der jeweiligen Sohle unter Tage sicherzustellen. Eine Vorrichtung der beschrieben Art ermöglicht aber auch ein entsprechend schnelles und genaues Anfahren verschiedener Sohlen unter Tage, bei gleichzeitigem Entladen über Tage.

Bekannte Versteckvorrichtungen weisen z.B. ein außenverzahntes Wellenrad und ein innenverzahnten Trommelrad auf, welche beide über ein axial bewegliches, innen- und außenverzahntes Kupplungsrad miteinander verbunden sind.

Dabei ist die Verzahnung des Wellenrades stets so ausgeführt, dass sie bei relativ engem Flankenspiel als Führungsverzahnung dient und immer - auch im ausgekuppelten Versteckzustand der Vorrichtung - im Eingriff bleibt.

Die Folge dieser Konstruktion ist, dass während des Betriebes der Maschine als auch beim Versteckvorganges Teile der Versteckvorrichtung mitrotieren, die eigentlich still stehen könnten. Geschaltet werden diese Vorrichtungen über einen nicht rotierenden und am Maschinenrahmen geführten Verschiebekragen/ Stellring, welcher das innen- und außenverzahnte Kupplungsrad in axialer Richtung hin und her bewegt und dabei die Verzahnung ein- und auskuppeln kann. Betätigt wird der Verschiebekragen/ Stellring dabei z.B. über zwei doppelt wirkende Hydraulikzylinder, die gegebenenfalls über ein Kniehebelsystem mit dem Verschiebekragen/ Stellring gekoppelt sind.

Nachteilig bei dieser Anordnung ist, dass während des normalen Förderbetriebes stets Relativbewegungen zwischen dem feststehenden Verschiebekragen/ Stellring und dem rotierenden Kupplungsrad auftreten. Diese Relativbewegungen führen zu Verschleiß und damit einhergehendem Wartungsaufwand. Außerdem sind diese Stellen potentielle Störstellen.

Weiterhin ist die auf dem Wellenrad realisierte Zahnführung dahingehend nachteilig, als dass sich Durchbiegungen innerhalb der Welle direkt auf die Verzahnungsstellen auswirken und somit zu einem Verklemmen der Versteckvorrichtung führen können.

Die Aufgabe der vorliegenden Erfindung ist es daher, eine Versteckvorrichtung der gattungs-gemäßen Art vorzusehen, die die genannten Nachteiler bekannter Vorrichtungen umgeht, die möglichst einfach zu realisieren ist und einen wartungsarmen, sicheren und wirtschaftlichen Betrieb ermöglicht.

Zur Lösung dieser Aufgabe ist eine Versteckvorrichtung zur lösbaren Verbindung der drehbar auf der Hauptwelle einer Fördermaschine gelagerten Lostrommel mit der Hauptwelle vorgesehen, auf der neben der Lostrommel eine zweite Seiltrommel als Festtrommel oder auch als zweite Lostrommel mit eigener Versteckvorrichtung angeordnet ist, wobei die lösbare Verbindung der Lostrommel mit der Hauptwelle formschlüssig mittels eines geführten und durch Betätigungsvorrichtungen ein- und ausrückbaren Kupplungsrades realisiert ist. Nach Maßgabe der Erfindung ist dabei die Führung des Kupplungsrades auf Seiten der Lostrommel angeordnet.

Das Kupplungsrad ist dabei vorzugsweise Teil einer Anordnung, die neben dem Kupplungsrad selbst aus einem mit der Lostrommel verbundenen Trommelrad und einem mit der Hauptwelle verbundenen Wellenrad besteht.

Mit einer Vorrichtung der genannten Art ist es möglich, dass das Kupplungsrad bzw. die Kupplungshülse während des Versteckbetriebes gemeinsam mit der Lostrommel still steht, sodass dann nur noch Hauptwelle, Festtrommel und Wellenrad rotieren.

In einer bevorzugten Variante der Erfindung erfolgt die Führung des Kupplungsrades über eine Zahnführung, wobei ebenso bevorzugt das Trommelrad mit einer Führungsverzahnung innenverzahnt ist und das Wellenrad mit einer Arbeitsverzahnung außenverzahnt ist, wobei das Kupplungsrad korrespondierende Verzahnungen aufweist. Das Kupplungsrad ist dabei über die Führungsverzahnung axial geführt.

In einer ebenso bevorzugten Variante der Erfindung erfolgt die Führung des Kupplungsrades über einen zylindrischen Passsitz mit Spielpassung, wobei das Trommelrad und das Wellenrad mit einer Arbeitsverzahnung außenverzahnt sind und wobei das Kupplungsrad eine korrespondierende Innenverzahnung aufweist.

Weiterhin bevorzugt sind die Zähne des Wellenrades bogenzahnförmig ausgeführt um Durchbiegungen der Hauptwelle innerhalb der Verzahnung in vorteilhafter Art und Weise ausgleichen zu können.

Ebenso bevorzugt ist, dass das Kupplungsrad durch eine Anzahl von Federelementen in eingekuppelter Stellung axial fixiert ist. Um die Vorteile der hier entwickelten Versteckvorrichtung voll auszunutzen, wird vorgeschlagen, eine ausreichende Anzahl der oben genannten Federn in gleichmäßigem Abstand entweder innerhalb oder außerhalb des Seilträgers bzw. der Lostrommel anzubringen, so dass, in Zusammenwirkung mit der Führung des Kupplungsrades bzw. der Kupplungshülse auf dem Trommelrad im Betriebszustand die Betätigungsvorrichtungen so weit eingefahren werden können, dass sie bei normalem Förderbetrieb keinerlei Kontakt zu den rotierenden Teilen und insbesondere zu dem Kupplungsrad haben.

Zusammenfassend ist hier eine Versteckvorrichtung der gattungsgemäßen Art offenbart, bei der ein außenverzahntes Wellenrad an der Hauptwelle der Fördermaschine und ein weiteres innen- oder außenverzahntes Trommelrad an dem Seitenschild des Seilträgers der Maschine fest über eine Schraubenverbindung angebracht sowie ein weiteres Kupplungsrad, welches entweder innen- und außenverzahnt oder nur innenverzahnt ist, axial beweglich ist und eine formschlüssige Verbindung zwischen Wellen- und Trommelrad herstellt, wobei es entweder in einer inneren bzw. äußeren Zahnführung oder über einen zylindrischen Passsitz geführt wird und über einen oder mehrere elektrische, hydraulische, pneumatische, elektrohydraulische oder andere Betätigungsvorrichtungen, auch in Verbindung mit einem Gestänge- oder Kniehebelsystem, in axialer Richtung aus der Zahnverbindung ausgekuppelt und durch mehrere vorgespannte Federpakete einer vordefinierten Größe nach dem erfolgten Versteckvorgang vollautomatisch wieder in die Zahnverbindung eingekuppelt und positioniert wird.

Mit der vorliegenden Erfindung ist es möglich, sämtliche Relativbewegungen aus dem System zu beseitigen, mit Ausnahme der unvermeidlichen Relativbewegungen an den Gleitbuchsen bzw. Wälzlagern zur Lagerung der Lostrommel auf der Hauptwelle.

Gleichzeitig verbessert die vorgeschlagene Vorrichtung die Führung des Kupplungsrades bzw. der Kupplungshülse und verhindert durch die bogenförmige Ausbildung der Zähne ein Verklemmen der Vorrichtung.

Die Betätigung durch Betätigungsvorrichtungen der gewünschten Art erfordert während des normalen Förderbetriebes keinerlei Kontakt zur Versteckvorrichtung oder zu anderen Teilen der Fördermaschine, so dass möglicherweise entstehende negative Einflüsse von vorne herein gänzlich eliminiert werden.

Weitere Eigenschaften und Vorteile der vorliegenden Erfindung ergeben sich aus der folgenden, in keiner Weise beschränkenden, Beschreibung bevorzugter Ausführungsformen der Er-findung im Zusammenhang mit den zugehörigen Figuren; darin zeigt:
Fig. 1 Eine Versteckvorrichtung in ausgekuppeltem und in eingekuppeltem Zustand; sowie
Fig. 2 eine Variante der Versteckvorrichtung nach Fig. 1.

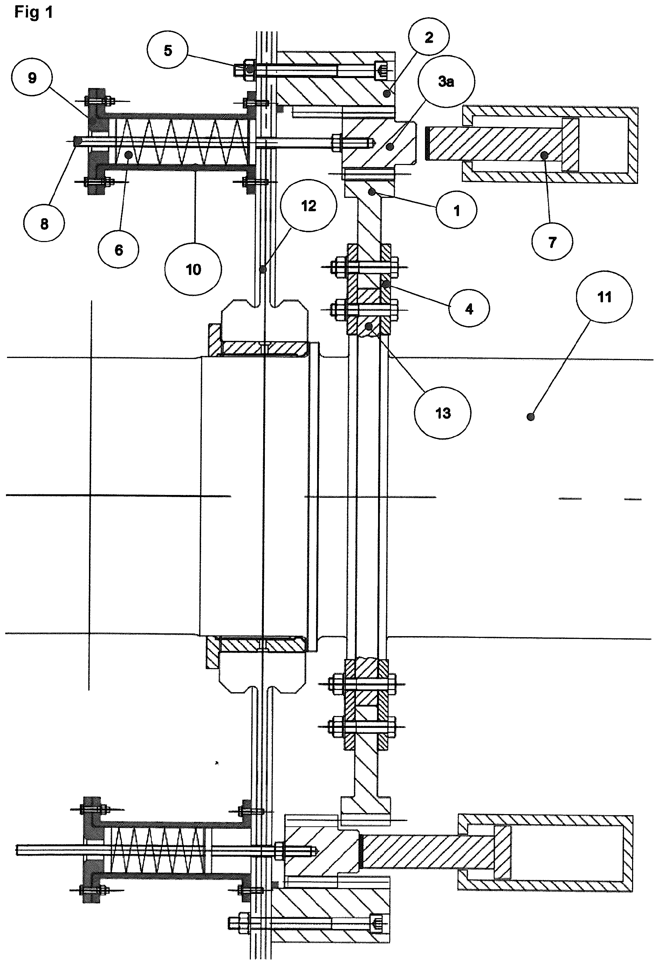

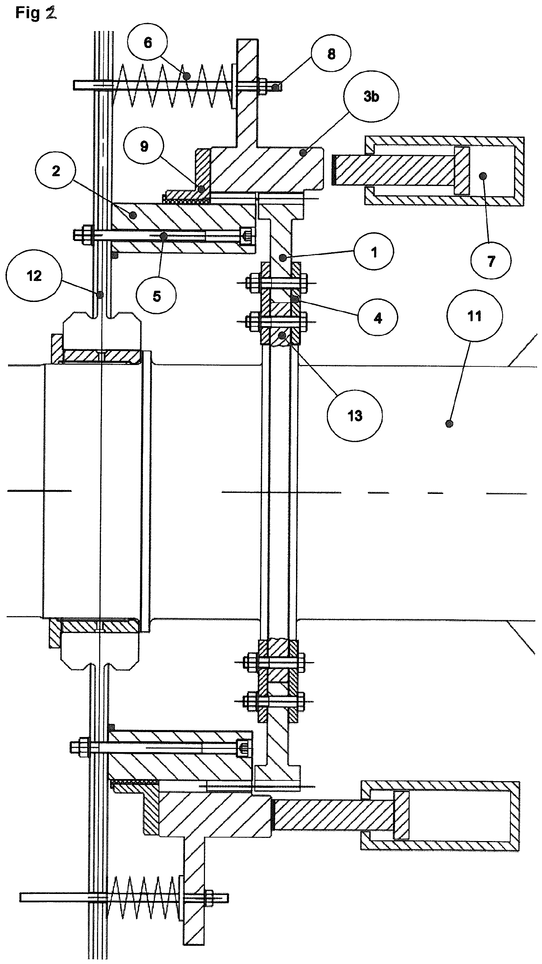

Die Figuren 1 und 2 zeigen zwei Ausführungsformen einer Versteckvorrichtung nach Maßgabe der vorliegenden Erfindung. Beide Figuren zeigen dabei in der oberen Hälfte den eingekuppelten Zustand und in der unteren Hälfte den ausgekuppelten Zustand der Versteckvor-richtung. Entsprechende Elemente sind dabei auch mit entsprechenden Bezugszeichen versehen.

Wie zu erkennen ist, ist bei beiden Varianten die Führung des innen- und außenverzahnten Kupplungsrades 3a bzw. der nur innenverzahnten Kupplungshülse 3b vom Wellenrad 1 weg auf das Trommelrad 2 verlegt.

Dadurch steht das Kupplungsrad 3a bzw. die Kupplungshülse 3b während des Versteckbetriebes still, sodass dann nur noch Hauptwelle 11, Festtrommel (nicht gezeigt) und Wellenrad 1 rotieren.

Die Führung auf dem Trommelrad 2 erfolgt dabei entweder über eine geeignete Zahnführung (z.B. DIN 5480) wie in Fig. 1 oder über einen zylindrischen Passsitz mit Spielpassung wie in Fig. 2.

Bei der Ausführungsform nach Fig. 1 bzw. der Führung in einer Zahnwellenverzahnung mit Evolventenflanken z.B. nach DIN 5480 ist das Trommelrad 2 mit eben dieser Führungsverzahnung innenverzahnt und über eine Schraubenverbindung 5 an dem Seitenschild 12 des Seilträgers angeflanscht.

Das außenverzahnte Wellenrad 1 wird mit einer sogenannten Arbeitsverzahnung z.B. nach DIN 867 mit evolventenförmigen Zähnen mit großzügigem Flanken- und Kopfspiel verzahnt und über eine Reibflanschverbindung 4 beidseitig an den vorgesehenen Wellenflansch 13 der Hauptwelle 11 angeflanscht. Die Zähne des Wellenrades 1 sind bogenzahnförmig ausgeführt, um Durchbiegungen der Hauptwelle 11 innerhalb der Verzahnung ausgleichen zu können.

Das eigentliche Kupplungsrad 3a, welches außen mit der zugehörigen Gegenverzahnung z. B. nach DIN 5480 und innen mit der zugehörigen Gegenverzahnung z.B. nach DIN 867 verzahnt ist, wird über die Führungsverzahnung axial geführt und gleichzeitig gegen eine ausreichende Anzahl von sich innerhalb des Seilträgers befindlichen Schraubenfedern oder Tellerfederpaketen 6 gespannt.

Während des normalen Betriebes haben die Betätigungsvorrichtungen 7 keinerlei Kontakt zum Kupplungsrad 3a. Zwischen beiden ist Luft vorgesehen, um schädliche Berührungen zu vermeiden. Erst im Versteckbetrieb bei aufgelegter Seilträgerbremse (nicht gezeigt) werden die Betätigungsvorrichtungen 7 ausgefahren und drücken gegen die äußere Stirnfläche des Kupplungsrades 3a. Dabei wird die Arbeitsverzahnung vollständig getrennt, die Führungsverzahnung bleibt erhalten, und gleichzeitig werden die Federpakete 6 innerhalb des Seilträgers voll gespannt. Dazu stecken die Federn auf einer Federstange 8, die mit einem ausgedrehten Bund versehen ist, welcher gegen die Federn drückt.

Das Gegenlager dazu befindet sich am Federdeckel 9, welcher innerhalb des Seilträgers in einen Federzylinder 10 eingeschraubt wird und über den zunächst die Federn definiert vorgespannt und beim Auskuppeln voll gespannt werden. Das Durchgangsloch am Seitenschild des Seilträgers für die Federstange 8 ist dabei mit so viel Luft versehen, dass immer zuerst die Zähne und nicht die Federstangen 8 gegen das Seitenschild die Last tragen.

Nach erfolgtem Verstecken werden die Betätigungsvorrichtungen 7 langsam wieder eingefahren und die Federn 6 entspannen sich.

Der Idealfall ist nun, dass die Zähne der Arbeitsverzahnung so passend zueinander stehen, dass sie ohne gegenseitige Berührung wieder eingekuppelt werden können.

Sollte dies nicht der Fall sein, kommt erneut der Vorteil der Federn 6 zum Tragen. Durch vorsichtiges Lösen der Seilträgerbremse "schnappt" die Verzahnung mit vordefinierter Kraft ein, sobald ein Zahn des Kupplungsrades 3a "seine" Zahnlücke am Wellenrad 1 gefunden hat. Nach Überwachung des vollständigen Einkuppelns durch Messgeräte (nicht gezeigt) kann der Förderbetrieb fortgesetzt werden.

Bei der Führung über einen zylindrischen Passsitz wie in Fig. 2 gezeigt, ist der hintere Teil des Trommelrades 2 zwischen Zähnen und Seitenschild 12 des Seilträgers mit einer Spielpassung versehen, deren Gegenstück zwei Buchsen 9 sind, welche die innenverzahnte Kupplungshülse 3b führen. Die Befestigung des hier außenverzahnten Trommelrades 2 und des Wellenrades 1, welches wie bei Lösung nach Fig. 1 außen bogenzahnförmig verzahnt ist, erfolgt analog zur Lösung nach Fig. 1 durch direkte Verschraubung 5 bzw. Flansche 4.

Die innenverzahnte Kupplungshülse 3b ist wie die Gegenverzahnung an Trommel- und Wellenrad mit einer Verzahnung nach DIN 867 mit großzügigem Flankenspiel verzahnt und wird gegen eine ausreichende Anzahl von sich zwischen Seitenschild 12 des Seilträgers und außen an der Kupplungshülse 3b integrierten Ring befindlichen Federn 6 gespannt.

Wie schon bei der Variante nach Fig. 1 haben während des normalen Betriebes die Betätigungsvorrichtungen 7 keinerlei Kontakt zur Kupplungshülse 3b. Zwischen beiden ist Luft vorgesehen, um schädliche Berührungen zu vermeiden.

Erst im Versteckbetrieb bei aufgelegter Seilträgerbremse (nicht gezeigt) werden die Betätigungsvorrichtungen 7 ausgefahren und drücken gegen die äußere Stirnfläche der Kupplungshülse 3b. Dabei wird die Verzahnung vollständig getrennt, die Kupplungshülse wird auf dem zylindrischen Passsitz mit Spielpassung in Richtung Seitenschild 12 des Seilträgers geführt und gleichzeitig werden die Federn 6 außerhalb des Seilträgers voll gespannt. Dazu stecken die Federn wiederum auf einer Federstange 8, die mit einem ausgedrehten Bund versehen ist, welcher gegen die Federn 6 drückt.

Das Gegenlager dazu stellt das Seitenschild 12 des Seilträgers dar. Das Durchgangsloch für die Federstange 8 am Seitenschild 12 des Seilträgers muss dabei mit so viel Luft versehen sein, dass immer zuerst die Zähne und nicht die Federstangen 8 gegen das Seitenschild 12 die Last tragen.

## Patentansprüche

1. Versteckvorrichtung zur lösbaren Verbindung der zumindest einen drehbar auf der Hauptwelle (11) einer Fördermaschine gelagerten Lostrommel mit der Hauptwelle (11), wobei die lösbare Verbindung der Lostrommel mit der Hauptwelle (11) formschlüssig mittels eines geführten und durch Betätigungsvorrichtungen (7) ein- und ausrückbaren Kupplungsrades (3a, 3b) realisiert ist, **dadurch gekennzeichnet, dass** die Führung des Kupplungsrades (3a, 3b) auf Seiten der Lostrommel angeordnet ist, wobei das Kupplungsrad (3a, 3b) gegen eine Anzahl von auf Seiten der Lostrommel angeordneten Federelementen (6) in eingekuppelter Stellung gespannt ist.

2. Versteckvorrichtung nach Anspruch 1, **dadurch gekennzeichnet, dass** das Kupplungsrad (3a, 3b) Teil einer Anordnung ist, die neben dem Kupplungsrad (3a, 3b) aus einem mit der Lostrommel verbundenen Trommelrad (2) und einem mit der Hauptwelle (11) verbundenen Wellenrad (1) besteht.

3. Versteckvorrichtung nach einem der Ansprüche 1 oder 2, **dadurch gekennzeichnet, dass** die Führung des Kupplungsrades (3a, 3b) über eine Zahnführung erfolgt.

4. Versteckvorrichtung nach Anspruch 2 und 3, **dadurch gekennzeichnet, dass** das Trommel-rad (2) mit einer Führungsverzahnung innenverzahnt ist und das Wellenrad (1) mit einer Arbeitsverzahnung außenverzahnt ist, wobei das Kupplungsrad (3a) korrespondierende Verzahnungen aufweist.

5. Versteckvorrichtung nach Anspruch 4, **dadurch gekennzeichnet, dass** das Kupplungsrad (3a) über die Führungsverzahnung axial geführt ist.

6. Versteckvorrichtung nach einem der Ansprüche 1 oder 2, **dadurch gekennzeichnet, dass** die Führung des Kupplungsrades (3b) über einen zylindrischen Passsitz mit Spielpassung erfolgt.

7. Versteckvorrichtung nach den Ansprüchen 2 und 6, **dadurch gekennzeichnet, dass** das Trommelrad (2) und das Wellenrad (1) mit einer Arbeitsverzahnung außenverzahnt sind, wobei das Kupplungsrad (3b) eine korrespondierende Innenverzahnung aufweist.

8. Versteckvorrichtung nach den Ansprüchen 2 bis 7, **dadurch gekennzeichnet, dass** die Zähne des Wellenrades (1) bogenzahnförmig ausgeführt sind.

9. Versteckvorrichtung nach einem der vorhergehenden Ansprüche, **dadurch gekennzeichnet, dass** die Betätigungsvorrichtungen (7) berührungsfrei zum Kupplungsrad (3a, 3b) im eingekuppelten Zustand desselben angeordnet sind.

## Claims

1. Resetting device for a disengageable connection between at least one loose drum rotatably mounted on the main shaft (11) of a hoisting machine and the said main shaft (11), whereby the disengageable connection between the loose drum and the main shaft (11) is accomplished as a positive connection with a guided coupling wheel (3a, 3b) engageable and disengageable with actuating means (7) **characterized in that** the guidance of the coupling wheel (3a, 3b) is arranged on the sides of the draw drum, the clutch wheel (3a, 3b) being clamped against a number of spring elements (6) arranged on the sides of the draw drum in the engaged position.

2. Resetting device according to claim 1, **characterized in that** the coupling wheel (3a, 3b) is part of an arrangement consisting of the coupling wheel (3a, 3b), a drum wheel (2) connected to the loose drum and a shaft wheel (1) connected to the main shaft (11).

3. Resetting device according to one of claims 1 or 2, **characterized in that** guidance of the coupling wheel (3a, 3b) is accomplished with gear teeth.

4. Resetting device according to claims 2 and 3, **characterized in that** the drum wheel (2) is provided with by internal guiding teeth and that the shaft wheel (1) is provided with a working gear of external gear teeth, whereby the coupling wheel (3a) has corresponding gear teeth.

5. Resetting device according to claim 4, **characterized in that** the coupling wheel (3a) is axially guided via the leading gear teeth.

6. Resetting device according to one of claims 1 or 2, **characterized in that** the guidance of the coupling wheel (3b) is accomplished via a cylindrical fitting with adaptable clearance.

7. Resetting device according to claims 2 and 6, **characterized in that** the drum wheel (2) and the shaft wheel (1) have a working gear with external gear teeth, whereby the coupling wheel (3b) has corresponding internal gear teeth.

8. Resetting device according to claims 2 to 7, **characterized in that** the teeth of the shaft wheel (1) have curved teeth.

9. Resetting device according to one of the previous claims, **characterized in that** the actuating means (7) are arranged without contact to the coupling wheel (3a, 3b) in the coupled state of the said coupling wheel.

## Revendications

1. Dispositif d'accouplement pour une liaison amovible entre au moins un tambour libre monté pivotant autour de l'arbre principal (11) d'une machine de transport et ledit arbre principal (11), la liaison amovible entre le tambour libre et l'arbre principal (11) étant obtenue par verrouillage positif avec une roue de couplage guidée (3a, 3b) qui peut être engagée et désengagée avec des moyens d'actionnement (7), **caractérisé en ce que** le guidage de la roue de couplage (3a, 3b) est agencé sur les côtés du tambour libre, la roue de couplage (3a, 3b), en position couplée, étant en tension contre une pluralité d'éléments de ressort (6) agencés depuis les côtés du tambour libre.

2. Dispositif d'accouplement selon la revendication 1, **caractérisé en ce que** la roue de couplage (3a, 3b) fait partie d'un ensemble qui, en plus de la roue de couplage (3a, 3b), est constitué d'une roue de tambour (2) reliée au tambour libre et une roue d'arbre (1) reliée à l'arbre principal (11).

3. Dispositif d'accouplement selon l'une des revendications 1 ou 2, **caractérisé en ce que** le guidage de la roue de couplage (3a, 3b) est obtenu par des dents de guidage.

4. Dispositif d'accouplement selon les revendications 2 et 3, **caractérisé en ce que** la roue de tambour (2) est dentée intérieurement avec une denture de guidage, et la roue d'arbre (1) est dentée extérieurement avec une denture de travail, la roue de couplage (3a) présentant une denture correspondante.

5. Dispositif d'accouplement selon la revendication 4, **caractérisé en ce que** la roue de couplage (3a) est guidée axialement par l'intermédiaire de la denture de guidage.

6. Dispositif d'accouplement selon l'une quelconque des revendications 1 ou 2, **caractérisé en ce que** le guidage de la roue de couplage (3b) est obtenu par l'intermédiaire d'un siège de montage cylindrique avec ajustement de jeu.

7. Dispositif d'accouplement selon les revendications 2 et 6, **caractérisé en ce que** la roue de tambour (2) et la roue d'arbre (1) sont dentées extérieurement avec une denture de travail, la roue de couplage (3b) ayant une denture interne correspondante.

8. Dispositif d'accouplement selon les revendications 2 à 7, **caractérisé en ce que** les dents de la roue d'arbre (1) sont en forme de dents courbes.

9. Dispositif d'accouplement selon l'une des revendications précédentes, **caractérisé en ce que** les dispositifs d'actionnement (7) sont agencés sans contact avec la roue de couplage (3a, 3b) disposée en position couplée.
